# FASCICULE DE BREVET EUROPEEN

(11) **EP 2 437 431 B1**
(45) Date de publication et mention de la délivrance du brevet: **26.06.2019**
(21) Numéro de dépôt: 11182806.7
(22) Date de dépôt: 26.09.2011
(51) Int. Cl.: H04W 48/16, H04W 24/02, H04W 88/06, H04L 12/751, H04L 12/24

(54) **Gestion de la topologie de plusieurs réseaux d'accès hétérogène et gestion de base de données d'informations sur la topologie**
Verwaltung der Topologie mehrerer Netze mit heterogenem Zugang, und Datenbankverwaltung auf der Topologie
Management of the topology of various heterogeneous access networks and management of database containing topology information

(30) Priorité: 30.09.2010 FR 1057906
(43) Date de publication de la demande: 04.04.2012
(73) Titulaire: Orange, 75015 Paris (FR)
(72) Inventeur: Benali, Nasr, 92400 COURBEVOIE (FR)

(56) Documents cités:
- WO-A1-2009/146864
- WO-A1-2010/037422
- US-B1- 7 606 175

## Description

L'invention concerne un dispositif et un procédé de gestion de la topologie de plusieurs réseaux d'accès hétérogène, un terminal de communication multi-accès, un dispositif et un procédé de gestion de base de données d'informations sur la topologie de réseaux d'accès hétérogènes, et un dispositif de renseignement sur la topologie de réseaux d'accès hétérogènes. En particulier, l'invention concerne la gestion de la base de données de détection et sélection de réseaux d'accès spécifiée par le standard 3GPP TS24.302 et TS24.312 sous l'appellation ANDSF (Access Network Détection and Selection).

La base de données ANDSF comporte au moins deux types d'informations : une information sur la topologie de réseaux d'accès hétérogènes, notamment en raison de leur appartenance à différentes technologies radio, et une information sur des règles de sélection d'un réseau d'accès, notamment des règles d'un opérateur de télécommunication. La base de données ANDSF est configurée manuellement.

L'information sur la topologie des réseaux d'accès permet notamment à un terminal de communication multi-accès intégrant deux interface radio différentes, aussi appelé terminal de communication multi-accès Mobile multi-accès bi-mode, tels que UMTS(pour Universal Mobile Télécommunication System ou système de télécommunication Mobile universel en français)/WLAN (pour Wireless Local Area Network ou réseau local sans fil en français), d'être informé à l'aide de cette base de données ANDSF des points d'accès de son deuxième réseau d'accès, notamment WLAN, se trouvant dans sa localisation courante de son premier réseau d'accès, notamment UMTS.

L'information de topologie des réseaux d'accès, appelée information de découverte des réseaux d'accès ou Discovery Information en anglais dans les spécifications 3GPP relatives à la plateforme ANDSF comportant la base de données ANDSF, notamment les spécifications 3GPP TS 24.312,, est composée de plusieurs attributs dont :
- le type d'accès, c'est-à-dire le type de réseau d'accès auquel se rapporte l'information de topologie, par exemple UMTS, WLAN, Wi MAX, etc.,
- un ou plusieurs identifiants de points d'accès appartenant au réseau d'accès du type d'accès spécifié par l'information de topologie,
- une zone géographique (cellule GSM, couverture d'un point d'accès WLAN, autre représentation géographique...) dans laquelle les points d'accès spécifiés par l'information de topologie sont opérationnels.

Ainsi, un terminal de communication multi-accès recevra l'information de topologie dont l'attribut de zone géographique correspondant à la zone géographique dans laquelle le terminal de communication multi-accès se trouve.

Lorsqu'un point d'accès d'un des réseaux d'accès subit des problèmes techniques, tous les terminaux multi-accès en mobilité dans une zone géographique comportant ce point d'accès verront leur mobilité vers ce point d'accès échoué surchargeant d'autant les réseaux d'accès concernés par la demande de mobilité. Ceci aura, par conséquent, un impact direct sur le déroulement des services de l'abonné utilisateur d'un terminal de communication multi-accès.

Le brevet américain US7606175 propose de mettre à jour la base de données de topologies propre à un noeud. Cela implique donc un calcul redondant de mise à jour au niveau de chaque noeud et un délai lié à ces calculs lors d'une mobilité de réseau d'accès.

Un des buts de la présente invention est de remédier à des inconvénients et des insuffisances de l'état de la technique.

Un objet de l'invention est un dispositif de gestion d'informations sur la topologie de plusieurs réseaux d'accès hétérogènes apte à être implémenté dans un terminal de communication multi-accès. Le dispositif de gestion d'informations sur la topologie comporte des moyens de mise à jour des informations sur la topologie reçues du dispositif de renseignement et stockées dans le terminal de communication multi-accès en fonction d'une mobilité de réseaux d'accès mise en oeuvre par le terminal de communication multi-accès.

Ainsi, le terminal est capable de tenir compte de situation de mobilité d'accès qu'il a rencontré lors de future mobilité d'accès.

Avantageusement, les moyens de mise à jour enregistrent une information de mise à jour en fonction d'une mobilité du terminal de communication multi-accès entre un premier réseau d'accès et un deuxième réseau d'accès, ladite information de mise à jour comportant :
- un identifiant d'un point d'accès source d'un desdits premier réseau d'accès et deuxième réseau d'accès, le terminal de communication multi-accès étant connecté audit point d'accès source avant la mobilité,
- un identifiant d'un point d'accès cible de l'autre desdits premier réseau d'accès et du deuxième réseau d'accès, le terminal de communication multi-accès tentant de se connecter audit point d'accès cible durant la mobilité, les types des réseaux d'accès des premier et deuxième réseaux d'accès.

Avantageusement, l'information de mise à jour comporte en outre le résultat de la mobilité de réseaux d'accès. Ainsi, les points d'accès ayant des problèmes de connexion sont identifiés permettant de réduire la charge du réseau sur ces points d'accès.

Avantageusement, l'information de mise à jour comporte en outre une information de caractérisation du résultat de mobilité de réseaux d'accès. Ainsi, les problèmes peuvent être éventuellement transmis ou consulter par l'opérateur sur la base de données pour être résolus.

Avantageusement, ledit dispositif de gestion d'informations sur la topologie comporte des moyens de transmission d'une information de mise à jour au dispositif de renseignement. Ainsi, le dispositif de renseignement est capable de tenir compte de situations de mobilité d'accès rencontrées par les terminaux échangeant avec ce dispositif de renseignement pour informer ces terminaux lors de future mobilité d'accès.

Un objet de l'invention est aussi un procédé de gestion de la topologie de plusieurs réseaux d'accès hétérogènes apte être mis en oeuvre par un terminal de communication multi-accès. Le procédé de gestion comporte une mise à jour d'une information sur la topologie reçue par ledit terminal de communication multi-accès d'un dispositif de renseignement sur la topologie desdits réseaux d'accès en fonction d'une mobilité de réseaux d'accès mise en oeuvre par le terminal de communication multi-accès.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie de... et étant conçus pour commander l'exécution des différentes étapes de ce procédé.

L'invention vise donc aussi un programme comprenant des instructions de code de programme pour l'exécution des étapes du procédé de gestion de la topologie de plusieurs réseaux d'accès selon la revendication précédente lorsque ledit programme est exécuté par un processeur.

Un objet de l'invention est encore un terminal de communication multi-accès comportant
- plusieurs interfaces d'accès à des réseaux d'accès hétérogènes,
- un dispositif de mobilité de réseaux d'accès dudit terminal de communication multi-accès entre un premier réseau d'accès parmi lesdits réseaux d'accès hétérogènes et un deuxième réseau d'accès parmi lesdits réseaux d'accès hétérogènes,
- un dispositif d'échange avec un dispositif de renseignement sur la topologie desdits réseaux d'accès,
- un dispositif de mise à jour des informations sur la topologie reçues dudit dispositif d'échange et stockées dans le terminal de communication multi-accès en fonction d'une mobilité mise en oeuvre par le dispositif de mobilité.

Avantageusement, le dispositif d'échange intègre une information de mise à jour fournie par le dispositif de mise à jour dans une requête d'information sur la topologie du terminal de communication multi-accès audit dispositif de renseignement. Ainsi, le réseau n'est pas surchargé par des mises à jour périodiques de la base de données.

Un objet de l'invention est en outre un dispositif de gestion d'une base de données d'informations sur la topologie de réseaux d'accès hétérogènes. Le dispositif de gestion de base de données comporte des moyens de mise à jour dans la base de données d'au moins une information sur la topologie d'au moins un desdits réseaux d'accès d'au moins une zone géographique spécifiée en fonction d'au moins une information de mise à jour reçue d'un terminal de communication multi-accès, ladite information de mise à jour étant apte à modifier des informations sur la topologie reçues d'un dispositif de renseignement comportant ladite base de données, et stockées dans ledit terminal de communication multi-accès en fonction d'une mobilité de réseaux d'accès mise en oeuvre par ledit terminal de communication multi-accès.

Un objet de l'invention est un procédé de gestion d'une base de données d'informations sur la topologie de réseaux d'accès hétérogènes. Le procédé de gestion de base de données comporte une mise à jour dans ladite base de données d'au moins une information sur la topologie d'au moins un desdits réseaux d'accès d'au moins une zone géographique spécifiée en fonction d'au moins une information de mise à jour stockée dans un terminal de communication multi-accès de communication apte à modifier des informations sur la topologie reçues d'un dispositif de renseignement comportant ladite base de données et stockées dans ledit terminal de communication multi-accès en fonction d'une mobilité de réseaux d'accès mise en oeuvre par ledit terminal de communication multi-accès.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie de... et étant conçus pour commander l'exécution des différentes étapes de ce procédé.

L'invention vise donc aussi un programme comprenant des instructions de code de programme pour l'exécution des étapes du procédé de gestion d'une base de données d'informations sur la topologie de réseaux d'accès selon la revendication précédente lorsque ledit programme est exécuté par un processeur.

Ces programmes peuvent utiliser n'importe quel langage de programmation et être sous la forme de code source, code objet ou code intermédiaire entre code source te code objet tel que dans une forme partiellement compilée ou dans n'importe quelle autre forme souhaitable.

Un objet de l'invention est aussi un dispositif de renseignement sur la topologie de réseaux d'accès hétérogènes comportant :
- Un dispositif de consultation apte à transmettre à un terminal de communication multi-accès au moins une information sur la topologie d'au moins un réseau d'accès dans une zone géographique spécifiée,
- une base de données d'informations sur la topologie de réseaux d'accès hétérogènes,
- un dispositif de gestion de ladite base de données apte à permettre une mise à jour dans la base de données d'au moins une information sur la topologie d'au moins un desdits réseaux d'accès d'au moins une zone géographique spécifiée en fonction d'au moins une information de mise à jour stockée dans un terminal de communication multi-accès de communication apte à modifier des informations sur la topologie reçues dudit dispositif de renseignement et stockées dans ledit terminal de communication multi-accès en fonction d'une mobilité de réseaux d'accès mise en oeuvre par ledit terminal de communication multi-accès.

Les caractéristiques et avantages de l'invention apparaîtront plus clairement à la lecture de la description, faite à titre d'exemple, et des figures s'y rapportant qui représentent :
- Figure 1, un schéma d'architecture dans laquelle l'invention peut être utilisée,
- Figure 2, un schéma simplifié de dispositif de gestion d'informations sur la topologie 13' de plusieurs réseaux d'accès hétérogènes selon l'invention,
- Figure 3, un schéma simplifié de terminal 1 de communication multi-accès selon l'invention,
- Figure 4, un schéma simplifié de dispositif de gestion d'une base de données 21 d'informations sur la topologie de réseaux d'accès hétérogènes selon l'invention,
- Figure 5, un schéma simplifié d'un dispositif de renseignement 2 sur la topologie de réseaux d'accès hétérogènes selon l'invention,
- Figure 6, un schéma simplifié d'une information de mise à jour selon l'invention,
- Figure 7, un schéma simplifié du procédé de mobilité de réseaux d'accès, et des procédés selon l'invention de gestion de la topologie et de gestion d'une base de données 21 d'informations sur la topologie de réseaux d'accès hétérogènes, notamment un premier réseau d'accès N1 et un deuxième réseau d'accès N2,
- Figure 8, une première illustration simplifiée d'utilisation d'un terminal 1 de communication multi-accès et d'un dispositif de renseignement 2 sur la topologie de réseaux d'accès hétérogènes, notamment un premier réseau d'accès N1 et un deuxième réseau d'accès N2, selon l'invention,
- Figure 9, une deuxième illustration simplifiée d'utilisation d'un terminal 1 de communication multi-accès et d'un dispositif de renseignement 2 sur la topologie de réseaux d'accès hétérogènes, notamment un premier réseau d'accès N1 et un deuxième réseau d'accès N2, selon l'invention.

L'invention permet de construire et/ou de maintenir la topologie des réseaux d'accès déployés par au moins un opérateur de télécommunication.

L'invention peut être implémentée pour toute mobilité de réseau d'accès utilisant une base de données d'information de topologie sur ces réseaux d'accès hétérogènes. Elle sera plus particulièrement décrite dans le cas d'un système de mobilité de réseaux d'accès hétérogènes de type ANSF selon les spécifications 3GPP TS24.302 et TS24.312 mettant en oeuvre une plateforme ANDSF comportant un serveur OMA-DM et une base de données ANDSF, ainsi qu'un client OMA-DM sur un terminal Mobile multi-accès. L'invention sera aussi plus particulièrement décrite dans le cadre d'une mobilité entre un réseau d'accès GSM et un réseau d'accès WLAN mais peut sans modification technique de celle-ci être appliqué à des mobilités de et vers d'autres réseaux d'accès notamment Wi Max.

Par réseau de communication est entendu un système comportant des moyens d'émission et de réception apte à permettre l'établissement d'une communication entre un terminal de communication et un dispositif de communication tel qu'un autre terminal de communication ou un dispositif de communication délivrant un service, notamment un serveur.

Par réseau d'accès est entendu un système composé de points d'accès, notamment des stations de base GSM ou UMTS ou des points d'accès Wifi, WLAN ou Wi Max, et au moins une interface de communication entre ces points d'accès et un réseau de communication, notamment Internet ou GSM.

Par réseaux d'accès hétérogènes sont entendus des réseaux d'accès proposant des types d'accès différents à un réseau de communication. Ces réseaux d'accès hétérogènes ne communiquent donc pas entre eux et, notamment, ne permettent pas une mobilité d'un point d'accès d'un premier réseau d'accès à un deuxième réseau d'accès. Ces réseaux d'accès hétérogènes nécessitent donc l'utilisation d'un système de mobilité de réseaux d'accès hétérogènes comportant une base de données d'information de topologie sur ces réseaux d'accès hétérogènes pour mettre en oeuvre la mobilité d'un premier réseau d'accès vers un deuxième réseaux d'accès proposant un type accès distinct de celui du premier réseau d'accès.

Par points d'accès sont entendus tous dispositifs émetteur/récepteur auxquels un terminal de communication peut se rattacher pour se connecter à un réseau de communication, notamment les stations de base de la téléphonie Mobile telles que les stations GSM, UMTS, etc. ; les bornes radio telles que les bornes Wifi, points d'accès WLAN, Wi Max, etc. ; ...

Par zone de couverture d'un point d'accès est entendue la zone géographique dans laquelle un terminal reçoit et émet vers ce point d'accès pour échanger à travers un réseau de communication.

Par zone géographique est entendu un espace géographique délimité qui peut être définie par un bâtiment : aéroport, mairie, etc., par une zone de couverture d'un point d'accès notamment une cellule GSM...

Par terminal de communication multi-accès est entendu un terminal apte à se connecter à au moins un réseau de communication et disposant d'au moins deux interfaces d'accès à des réseaux d'accès proposant des accès de type différents, par exemple un terminal bi-mode UMTS/WLAN ou un terminal GSM, Wi Max, WLAN...

Par information sur la topologie des réseaux d'accès hétérogènes est entendu toute information permettant de définir un lieu, notamment une zone géographique, et ses propriétés en termes d'accès à un réseau de communication, les points d'accès disponibles des différents types d'accès dans cette zone géographique.

Par information de mise à jour est entendue une information permettant d'ajouter, modifier, supprimer une information sur la topologie des réseaux d'accès hétérogènes.

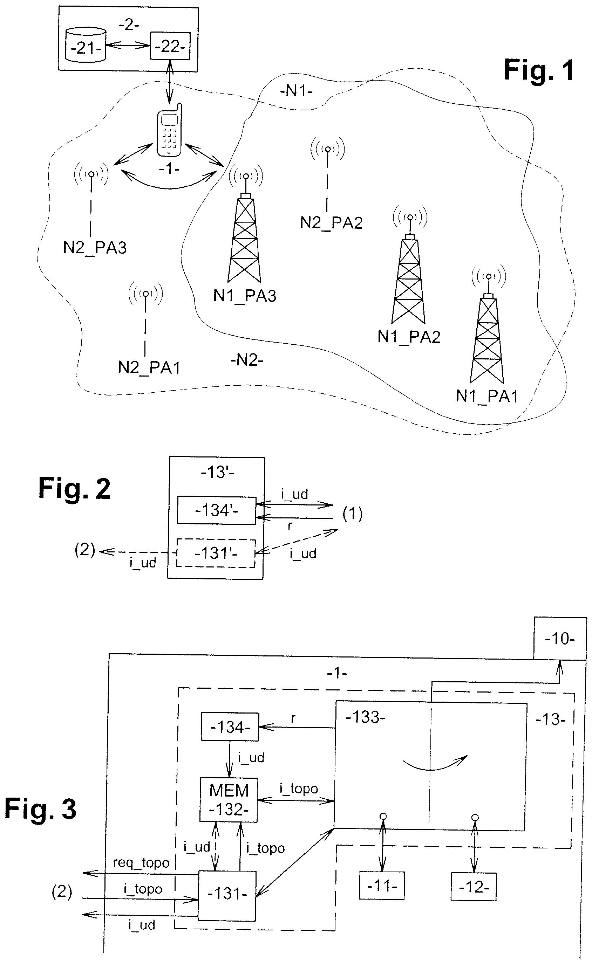

La figure 1 illustre deux réseaux d'accès hétérogènes : un premier réseau d'accès N1, par exemple N1 est un réseau d'accès UMTS, et un deuxième réseau d'accès N2, par exemple N2 est un deuxième réseau d'accès N2, WLAN, pour lesquels sont déployés plusieurs points d'accès respectivement N1_PA1, N1_PA2, N1_PA3, etc. et N2_PA1, N2_PA2, N2_PA3, etc. couvrant des zones géographiques qui sont en partie communes. Un dispositif de renseignement 2, aussi appelé plateforme de renseignement, sur la topologie des réseaux d'accès hétérogènes, notamment de type ANDSF, comporte un dispositif de consultation 22 (aussi appelé serveur de consultation, notamment serveur ANDSF ou serveur OMA-DM- Open *Mo*bile Alliance - Device Management ou dispositif de gestion des terminaux mobiles défini par le groupe de travail OMA) d'une base de données 21 d'informations sur la topologie des réseaux d'accès hétérogènes dont les réseaux d'accès N1 et N2.

La base de données 21 comporte, en particulier, règles concernant la sélection du réseau d'accès fournies notamment par l'opérateur de télécommunication. Par exemple, dans le cas d'un opérateur UMTS qui a déployé des points d'accès WLAN publiques dans certaines zones de la couverture UMTS, la règle de l'opérateur peut indiquer qu'un terminal 1 de communication multi-accès doit se connecter au réseau de communication en priorité par le deuxième réseau d'accès N2, notamment WLAN, dans ces zones.

Un terminal 1 de communication multi-accès est connecté pour accéder via le premier réseau d'accès N1 à des services. Le terminal 1 de communication multi-accès peut notamment comporter une mémoire 132 avec au moins une information de topologie des réseaux d'accès. Si cette information correspond à la zone géographique actuelle du terminal 1 de communication multi-accès, le terminal 1 de communication multi-accès utilise l'identifiant du point d'accès de cette information pour effectuer une mobilité du premier réseau d'accès N1 vers le deuxième réseau d'accès N2, en particulier en se connectant au point d'accès N2_PA3 comme l'illustre la figure 1.

Si le terminal 1 de communication multi-accès ne dispose pas en local, notamment dans sa mémoire 132, d'une information de topologie associée à la zone géographique actuelle du terminal 1 de communication multi-accès, le terminal 1 de communication multi-accès consulte le dispositif de renseignement 2. Le dispositif de consultation 22 du dispositif de renseignement 2 recherche dans sa base de données 21, l'information de topologie associée à cette zone géographique et la transmet au terminal 1 de communication multi-accès afin que le terminal 1 de communication multi-accès exécute la mobilité de réseaux d'accès du premier réseau d'accès N1 vers le deuxième réseau d'accès N2, en particulier en se connectant au point d'accès N2_PA3 comme l'illustre la figure 1.

Notamment, le dispositif de consultation 22 fournit au terminal 1 de communication multi-accès une liste de points d'accès appartenant à des réseaux d'accès hétérogènes correspondant à la zone géographique actuelle du terminal 1 de communication multi-accès, par exemple des « cellules » voisines appartenant à des réseaux d'accès différents, par exemple un premier réseau d'accès N1 et un deuxième réseau d'accès N2.

En particulier, la communication entre le terminal 1 de communication multi-accès et la plateforme de renseignement 2 est basé sur l'échange de fichiers, tels que des fichiers XML concernant au moins une information de topologie et, le cas échéant, au moins une règle de sélection. L'échange est basé sur un protocole d'échange tel que le protocole http sous forme de messages notamment chiffrés. Le chiffrement est, alors, effectué au niveau de la couche protocolaire TLS (Transport Layer Security, ou couche de sécurité du transport en français). Notamment, l'intégrité des messages sera vérifiée à réception au niveau de la couche TLS. Pour plus d'information sur l'interface entre le terminal 1 de communication multi-accès et la plateforme de renseignement 2 se référer aux spécifications 3GPP TS 24.302 et TS 24.312.

La figure 2 illustre un dispositif de gestion d'informations sur la topologie 13' de plusieurs réseaux d'accès hétérogènes apte à être implémenté dans un terminal 1 de communication multi-accès. Le dispositif de gestion d'informations sur la topologie 13' comporte des moyens de mise à jour 134' des informations sur la topologie reçues du dispositif de renseignement 2 et stockées dans le terminal 1 de communication multi-accès en fonction d'une mobilité de réseaux d'accès mise en oeuvre par le terminal 1 de communication multi-accès.

Dans une variante de réalisation, lors d'une mobilité de réseaux d'accès du terminal 1 de communication multi-accès, le dispositif de gestion d'informations sur la topologie 13' reçoit ou récupère du terminal 1 de communication multi-accès des informations supplémentaires:
- sur le réseau d'accès « de départ», aussi appelé réseau d'accès source, en l'occurrence le premier réseau d'accès N1, auquel le terminal 1 de communication multi-accès est connecté au début du procédé de mobilité de réseaux d'accès. Notamment, ces informations concernent le type de réseau d'accès et/ou le point d'accès auquel est rattaché le terminal 1 de communication multi-accès.
- sur le réseau d'accès « d'arrivée», aussi appelé réseau d'accès cible, en l'occurrence le deuxième réseau d'accès N2 auquel le terminal 1 de communication multi-accès sera connecté après le procédé de mobilité de réseaux d'accès en cas de mobilité réussi. Notamment, ces informations concernent le type de réseau d'accès et/ou le point d'accès auquel sera rattaché le terminal 1 de communication multi-accès.
- r sur le résultat du procédé de mobilité.

Les moyens de mise à jour 134' effectuent la mise à jour *MaJ,* notamment au moyen d'une information de mise à jour *i_ud,* sur le terminal 1 de communication multi-accès en fonction de ces informations supplémentaires.

Dans une variante de réalisation, les moyens de mise à jour 134' génère soit une commande de mise à jour *i_ud* apte à modifier les informations sur la topologie stockées dans le terminal 1 de communication multi-accès, soit une information de mise à jour *i_ud* apte à compléter les informations sur la topologie stockées dans le terminal 1 de communication multi-accès. Notamment, une commande de mise à jour permet éventuellement soit de supprimer des informations sur la topologie, soit d'ajouter un attribut indiquant la suppression et/ou la modification de l'information de topologie ou des données de l'information de topologie associée à un point d'accès, soit d'ajouter une information de mise à jour associée ou non à une information de topologie.

Dans une variante de réalisation particulière, le dispositif de gestion d'informations sur la topologie 13' comporte des moyens de transmission 131' d'une information de mise à jour au dispositif de renseignement 2. Notamment, les moyens de transmission 131' reçoivent ou récupèrent du terminal 1 de communication multi-accès une ou plusieurs informations de mise à jour *i_ud.* Les moyens de transmission 131' sont, en particulier, aptes à insérer l'information de mise à jour *i_ud* dans un message à destination du dispositif de renseignement 2, notamment dans un message émis par le terminal 1 de communication multi-accès, tel que, par exemple, une requête sur la topologie des réseaux d'accès correspondant à la zone géographique actuelle, c'est-à-dire au moment de la génération de la requête ou au moment de l'émission de la requête, du terminal 1 de communication multi-accès. Cette requête peut être le message Access Network Information Request tel que défini dans la spécification 3GPP TS 24.302.

La figure 3 illustre un terminal 1 de communication multi-accès. Le terminal 1 de communication multi-accès comporte
- plusieurs interfaces d'accès 11, 12 à des réseaux d'accès hétérogènes, respectivement à un premier réseau d'accès N1 et un deuxième réseau d'accès N2,
- un dispositif de mobilité 133 de réseaux d'accès dudit terminal 1 de communication multi-accès d'un premier réseau d'accès N1 parmi lesdits réseaux d'accès hétérogènes vers un deuxième réseau d'accès N2 parmi lesdits réseaux d'accès hétérogènes,
- un dispositif d'échange 131 avec un dispositif de renseignement 2 sur la topologie desdits réseaux d'accès, notamment un client OMA-DM,
- un dispositif de mise à jour 134 des informations sur la topologie reçues par ledit dispositif d'échange 131 du dispositif de renseignement 2 et stockées dans le terminal 1 de communication multi-accès en fonction d'une mobilité mise en oeuvre par le dispositif de mobilité 133.

Dans une variante de réalisation de l'invention, le dispositif de mobilité 133 est placé entre un dispositif de réception, comportant notamment une antenne 10 du terminal 1 de communication multi-accès et les interfaces d'accès 11 et 12 du terminal 1 de communication multi-accès.

Dans une variante de réalisation de l'invention, le terminal 1 de communication multi-accès comporte une mémoire 132 sur laquelle sont stockées les informations sur la topologie et/ou les informations de mise à jour.

Dans une variante de réalisation de l'invention, le dispositif de mobilité 133 est connecté à une mémoire 132 du terminal 1 de communication multi-accès comportant les informations sur la topologie stockée sur le terminal 1 de communication multi-accès pour recevoir ou récupérer des informations sur la topologie *i_topo* lors d'une mobilité de réseaux d'accès.

Dans une variante de réalisation de l'invention, le dispositif de mobilité 133 est connecté au dispositif de mise à jour 134. Ainsi, le dispositif de mis à jour 134 peut recevoir ou récupérer des informations concernant une mobilité d'accès, notamment le résultat r : si la mobilité de réseaux d'accès a été exécuté avec succès ou non.

Dans une variante de réalisation de l'invention, le dispositif d'échange 131 intègre des informations de mise à jour fournies par le dispositif de mise à jour 134 dans une requête *req_topo* d'information de topologie du terminal 1 de communication multi-accès au dispositif de renseignement 2.

Dans une variante de réalisation de l'invention, le dispositif de mise à jour 134 est connecté à la mémoire 132 afin de stocker une information de mise à jour *i_ud* dans le terminal 1 de communication multi-accès.

Dans une variante de réalisation de l'invention, le dispositif d'échange 131 est connecté à la mémoire 132 afin de recevoir ou récupérer les informations de mise à jour *i_ud* pour les transmettre au dispositif de renseignement 2.

Dans une variante de réalisation de l'invention, le dispositif d'échange 131 est connecté au dispositif de mobilité 133 afin d'émettre une requête d'information de topologie *req_topo* à un dispositif de renseignement 2 sur demande du dispositif de mobilité 133 lors d'une mobilité de réseaux d'accès.

Ainsi, le terminal 1 de communication multi-accès collecte des informations sur l'environnement radio (réseaux d'accès, type de réseaux d'accès, identifiants de points d'accès (antenne GSM, point d'accès WLAN ou autre antenne radio relais, etc.), résultats de mobilité de réseaux d'accès, caractérisations de résultats de mobilité de réseaux d'accès, etc.) durant sa mobilité d'un réseau d'accès source : le premier réseau d'accès N1, à un réseau d'accès cible : le deuxième réseau d'accès N2 en vue de les transmettre à une base de données 21 d'informations sur la topologie de réseaux d'accès hétérogènes.

Par exemple, un identifiant de point d'accès est un paramètre CGI (Celle Global Identity ou identité globale de cellule en français) défini dans la spécification 3GPP TS23.003, notamment pour une cellule GSM ou un identifiant SSID (Service Set Identifier ou identifiant d'ensemble de service en français) notamment pour un point d'accès WLAN ou un identifiant HESSID (Homogenous Extended Service Set ID ou identifiant d'ensemble de service étendu homogène en français) notamment pour un point d'accès WLAN compatible avec la norme 802.11u.

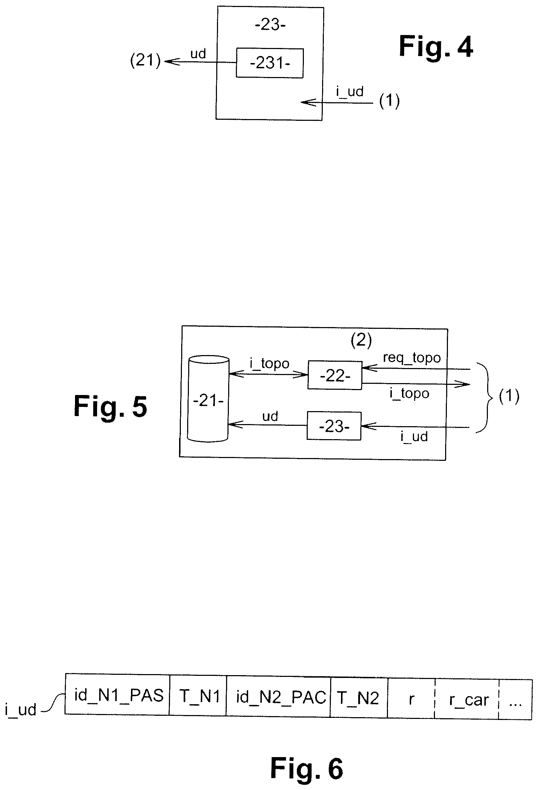

La figure 4 illustre un dispositif 23 de gestion d'une base de données 21 d'informations sur la topologie de réseaux d'accès hétérogènes d'une plateforme de renseignement 2 sur la topologie de réseaux d'accès hétérogènes. Le dispositif 23 de gestion de base de données 21 comporte des moyens de mise à jour 231 d'au moins une information sur la topologie d'au moins un desdits réseaux d'accès. Les moyens de mise à jour 231 reçoivent au moins une information de mise à jour *i_ud* reçue d'un terminal 1 de communication multi-accès, l'information de mise à jour *i_ud* étant apte à modifier des informations sur la topologie reçues de ladite plateforme de renseignement 2 et stockées dans ledit terminal 1 de communication multi-accès en fonction d'une mobilité de réseaux d'accès mise en oeuvre par ledit terminal 1 de communication multi-accès. Ainsi, les moyens de mise à jour 231 effectuent une mise à jour d'au moins une zone géographique spécifiée grâce à cette information de mise à jour *i_ud.*

Dans le cas particulier d'une base de données 21 ANDSF, l'information de topologie permettant la découverte des réseaux d'accès est appelée information de découverte ou Discovery Information (voir la spécification 3GPP TS24.312). L'information de topologie est composée de plusieurs attributs: notamment le type d'accès (AccessType) et/ou l'identifiant de l'accès (AccessNetworkReference) et/ou la zone de validité (ValidityArea). Le type d'accès désigne le type de réseaux d'accès par exemple UMTS, WLAN, Wi MAX, etc. L'identifiant d'accès désigne le(s) identifiant(s) du(des) point(s) d'accès appartenant au réseau d'accès de type « Type d'accès ». La zone de validité constitue la zone géographique dans laquelle l'information de topologie est valide. Cette zone peut être une cellule GSM, la zone de couverture d'un point d'accès WLAN ou Wi MAX, etc. ou toute autre représentation géographique d'une zone d'itinérance d'un terminal 1 de communication multi-accès. Ainsi, un terminal 1 de communication multi-accès se trouvant dans cette zone dite « zone de validité » recevra la(les) information(s) de topologie correspondante(s) à cette zone.

La figure 5 illustre un dispositif de renseignement 2 sur la topologie de réseaux d'accès hétérogènes. Le dispositif de renseignement 2 comporte un dispositif de consultation 22 apte à transmettre à un terminal 1 de communication multi-accès au moins une information *i_topo* sur la topologie de plusieurs réseaux d'accès hétérogènes dans une zone géographique spécifiée. Le dispositif de renseignement 2 comporte une base de données 21 d'informations sur la topologie de plusieurs réseaux d'accès hétérogènes en fonction de zones géographiques. Le dispositif de renseignement 2 comporte un dispositif 23 de gestion de ladite base de données 21 apte à permettre une mise à jour *ud* d'au moins une information sur la topologie d'au moins un desdits réseaux d'accès d'au moins une zone géographique spécifiée en fonction d'au moins une information de mise à jour *i_ud* stockée dans un terminal 1 de communication multi-accès de communication apte à modifier des informations sur la topologie reçues dudit dispositif de renseignement 2 et stockées dans ledit terminal 1 de communication multi- accès en fonction d'une mobilité de réseaux d'accès mise en oeuvre par ledit terminal 1 de communication multi-accès.

Dans une variante de réalisation particulière, le dispositif de consultation 22 est apte à recevoir une requête *req_topo* d'information en topologie pour une zone géographique spécifiée provenant d'un terminal 1 de communication multi-accès. Le dispositif de consultation 22 reçoit ou récupère, suite à cette requête *req_topo,* l'information requise *i_topo* dans la base de données 21, puis la transmet au terminal 1 de communication multi-accès.

Dans une variante de réalisation particulière, le dispositif 23 de gestion de la base de données 21 reçoit une information de mis à jour *i_ud* du terminal 1 de communication multi-accès et l'utilise pour soit enregistrer une mise à jour *ud* d'une information de topologie, notamment enregistrer une nouvelle information de topologie, modifier (par exemple en ajoutant un attribut ou en modifiant un attribut sur le taux de succès de mobilité vers un point d'accès) ou supprimer une information de topologie existante.

La figure 6 illustre un exemple d'information de mise à jour *i_ud* correspondant à une mobilité d'un premier réseau d'accès N1, dans lequel le terminal 1 est rattaché à un point d'accès source N1_PAS, vers un deuxième réseau d'accès N2, dans lequel le terminal 1 se rattache à un point d'accès N2_PAC. L'information de mise à jour *i_ud* comporte :
- un identifiant d'un point d'accès source du premier réseau d'accès ID_N1_PAS, le terminal 1 de communication multi-accès étant connecté audit point d'accès source avant la mobilité,
- un identifiant d'un point d'accès cible du deuxième réseau d'accès ID_N2_PAC, le terminal 1 de communication multi-accès tentant de se connecter audit point d'accès cible N2_PAC durant la mobilité,
- les types des réseaux d'accès des premier et deuxième réseaux d'accès, respectivement T_N1 et T_N2.

Dans une variante de réalisation, l'information de mise à jour comporte aussi des informations de type de réseaux d'accès T_N1, T_N2.

Dans une variante de réalisation de l'invention, l'information de mise à jour *i_ud* comporte en outre le résultat de la mobilité de réseaux d'accès r.

Dans une variante de réalisation de l'invention, l'information de mise à jour *i_ud* comporte en outre une information de caractérisation *r_car* du résultat de mobilité de réseaux d'accès.

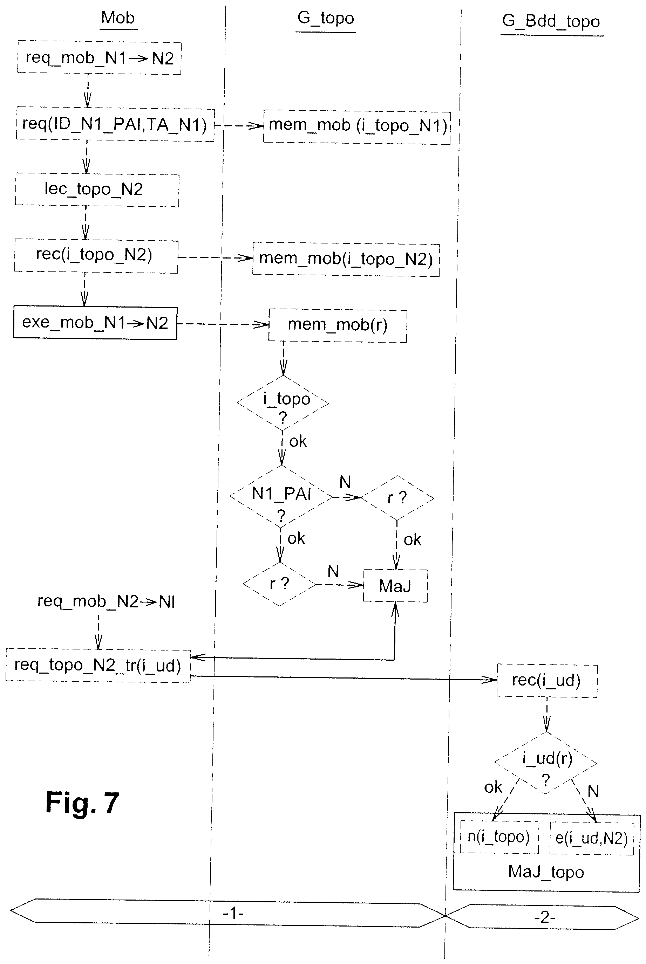

La figure 7 illustre un procédé de gestion *G_topo* de la topologie de plusieurs réseaux d'accès hétérogènes apte être mis en oeuvre par un terminal 1 de communication multi-accès. Le procédé de gestion comporte une mise à jour *MAJ* d'une information de topologie reçue par ledit terminal 1 de communication multi-accès d'un dispositif de renseignement 2 sur la topologie desdits réseaux d'accès en fonction d'une mobilité de réseaux d'accès mise en oeuvre par le terminal 1 de communication multi-accès.

Dans une variante de réalisation, la mise à jour *MAJ* comporte la génération d'une information de mise à jour *i_ud.* La mise à jour *MAJ* comporte, éventuellement, une mémorisation locale (par exemple dans le terminal 1 de communication multi-accès) de l'information de mise à jour. Une alternative de cette variante de réalisation est une mise à jour *MAJ* comportant une modification ou suppression d'une information de topologie *i_topo* stockée dans le terminal 1 de communication multi-accès.

Dans une variante de réalisation, le procédé de gestion de topologie *G_topo* comporte une récupération ou réception d'une ou plusieurs informations concernant une mobilité d'accès du terminal 1 de communication multi-accès, notamment des informations concernant le réseau d'accès source, en l'occurrence le premier réseau d'accès N1, et/ou le réseau d'accès cible, en l'occurrence le deuxième réseau d'accès N2, tels que des identifiants de point d'accès, le type d'accès du réseau, etc., et/ou la mobilité : résultat (succès de la mobilité ou non), caractérisation du résultat (notamment type d'erreur, nombre de tentative de mobilité infructueuse, etc. en cas d'échec ou délai entre la requête en mobilité et la connexion sur le réseau d'accès cible, en l'occurrence le deuxième réseau d'accès N2, en cas de succès, qualité des connexions, notamment le débit).

Dans une variante de réalisation, une vérification de la disponibilité *i_topo* ?sur le terminal 1 de communication multi-accès d'information de topologie est effectuée avant d'autoriser une mise à jour. Le cas échéant, le procédé peut en outre comporter une vérification de la disponibilité d'information sur le point d'accès source N1_PAS et/ou le point d'accès cible N2_PAC.

Dans une variante de réalisation, le procédé de gestion *G_topo* peut conditionner l'exécution de la mise à jour en fonction d'une mobilité à la disponibilité d'information de topologie *i_topo* ? sur le terminal 1 de communication multi-accès et, notamment, à la disponibilité d'information de topologie concernant le point d'accès source N1_PAS ? de la mobilité servant à la mise à jour, et/ou du résultat de cette mobilité *r* ?. En particulier, le procédé de gestion *G_topo* peut effectuer la mise à jour uniquement en cas de succès d'une mobilité à partir d'un point d'accès source N1_PAS non enregistré dans les informations sur la topologie sur le terminal 1 de communication multi-accès et/ou en cas d'échec d'une mobilité à partir d'un point d'accès source N1_PAS enregistré dans les informations sur la topologie sur le terminal 1 de communication multi-accès.

Dans une variante de réalisation, le procédé de gestion *G_topo* peut conditionner l'exécution de la mise à jour en fonction d'une mobilité à la disponibilité d'information de topologie *i_topo* ? sur le terminal 1 de communication multi-accès et, notamment, à la disponibilité d'information de topologie concernant le point d'accès cible N2_PAC ? de la mobilité servant à la mise à jour, et/ou du résultat de cette mobilité *r* ?. En particulier, le procédé de gestion *G_topo* peut effectuer la mise à jour uniquement en cas de succès d'une mobilité vers un point d'accès cible N2_PAC non enregistré dans les informations sur la topologie sur le terminal 1 de communication multi-accès et/ou en cas d'échec d'une mobilité vers un point d'accès cible N2_PAC enregistré dans les informations sur la topologie sur le terminal 1 de communication multi-accès.

Dans une variante de réalisation, le procédé de gestion *G_topo* comporte une mémorisation, stockage ou enregistrement de données concernant :
- *mem_Mob*(*i_topo_*N1) le réseau d'accès source, en l'occurrence le premier réseau d'accès N1, et/ou *mem_Mob*(*i_topo_*N2) le réseau d'accès cible, en l'occurrence le deuxième réseau d'accès N2, de la mobilité utilisée par la mise à jour MaJ, notamment des informations de même type que celles stockées dans des informations sur la topologie : identifiant de point d'accès, type de réseaux d'accès, etc.
- le résultat de la mobilité *mem_Mob*(r)*,* notamment succès/échec et/ou des informations de caractérisation de ce résultat.

Ces données sont reçues et/ou récupérées lors de la mise en oeuvre d'un procédé de mobilité de réseaux d'accès *Mob* suite à une requête en mobilité de réseaux d'accès *req_Mob_*N1→ N2.

Notamment, la mobilité *exe_Mob_*N1→ N2 d'un réseau d'accès source, en l'occurrence le premier réseau d'accès N1, vers un réseau d'accès cible, en l'occurrence le deuxième réseau d'accès N2, est exécutée avec succès lorsqu'à la fin de la mobilité, le terminal 1 de communication multi-accès est connecté au deuxième réseau d'accès N2. Dans une variante de réalisation du procédé de mobilité *Mob,* la mobilité *exe_Mob_*N1→ N2 fournie au procédé de gestion *G_topo* son résultat.

Dans une alternative (non illustrée), le procédé de mobilité *Mob* comporte une mémorisation, stockage ou enregistrement du résultat de la mobilité *mem_Mob*(r)*,* notamment succès/échec et/ou des informations de caractérisation de ce résultat.

Notamment, préalablement à la mobilité *exe_Mob_*N1→ N2 d'un réseau d'accès source, en l'occurrence le premier réseau d'accès N1, vers un réseau d'accès cible, en l'occurrence le deuxième réseau d'accès N2, le procédé de mobilité *Mob* comporte une réception *rec*(ID_N1_PAS, TA_N1) des informations concernant le premier réseau ou réseau source N1, notamment l'identifiant du point d'accès source ID_N1_PAS, par exemple une antenne GSM, et/ou le type de réseau d'accès, par exemple GSM, du point d'accès auquel le terminal 1 de communication multi-accès est connecté. Ces informations proviennent du premier réseau d'accès N1.

Dans une alternative (non illustrée), le procédé de mobilité comporte une mémorisation, stockage ou enregistrement des informations concernant le premier réseau ou réseau source N1 *mem_Mob*(*i_topo_*N1)*.*

Notamment, préalablement à la mobilité *exe_Mob_*N1→ N2 d'un réseau d'accès source, en l'occurrence le premier réseau d'accès N1, vers un réseau d'accès cible, en l'occurrence le deuxième réseau d'accès N2, le procédé de mobilité *Mob* comporte une demande de lecture sur le terminal 1 de communication multi-accès *lec_topo_*N2 et/ou une requête au dispositif de renseignement 2 des informations sur la topologie concernant le deuxième réseau ou réseau cible N2. le procédé comporte une réception de cette information de topologie *rec(i_topo_*N2). En particulier, l'information concernant le type d'accès est fournie par le réseau d'accès cible, en l'occurrence le deuxième réseau d'accès N2, par exemple WLAN, vers lequel le terminal 1 de communication multi-accès a initié sa mobilité de réseaux d'accès l'information de topologie comporte un identifiant de point d'accès du réseau d'accès cible ID_N2_PAC, en l'occurrence le deuxième réseau d'accès N2, notamment un point d'accès WLAN.

Dans une alternative (non illustrée), le procédé de mobilité comporte une mémorisation, stockage ou enregistrement des informations concernant le deuxième réseau ou réseau cible N2 *mem_Mob*(*i_topo_*N2)*.*

Ainsi, dans une variante de réalisation de l'invention, un terminal 1 de communication multi-accès mettant en oeuvre le procédé de gestion d'information de topologie *G_topo* vérifie *i_topo* ? s'il a des informations (envoyées antérieurement par le dispositif de renseignement 2) stockées dans sa mémoire 132 qui concernent la topologie des réseaux d'accès voisines et valides dans la zone géographique actuelle du terminal 1 de communication multi-accès, par exemple la cellule formée par un point d'accès source de type GSM auquel est rattaché le terminal 1 de communication multi-accès avant la mobilité de réseaux d'accès. En d'autres termes, le terminal 1 de communication multi-accès vérifie s'il a stockée une information de topologie ou Discovery Information correspondant à cette zone géographique.

Si c'est le cas, le terminal 1 de communication multi-accès compare le paramètre d'identifiant de point d'accès source ID_N1_PAS, en l'occurrence du premier réseau d'accès, avec celui enregistré dans sa mémoire 132. S'il n'existe aucune correspondance, le terminal 1 de communication multi-accès enregistre les informations d'identifiants de points d'accès source et cible et de type d'accès source et cible notamment sous la forme d'une information de mise à jour. Ainsi, la topologie est mise à jour avec un nouveau point d'accès N1_PAS déployé dans le réseau d'accès source, en l'occurrence le premier réseau d'accès N1.

Si c'est le cas, le terminal 1 de communication multi-accès compare le paramètre d'identifiant de point d'accès cible ID_N2_PAC avec celui enregistré dans sa mémoire 132. S'il n'existe aucune correspondance et si la mobilité a été opéré avec succès, le terminal 1 de communication multi-accès enregistre les informations d'identifiants de points d'accès source et cible et de type d'accès source et cible, indication de succès de la mobilité notamment sous la forme d'une information de mise à jour. Ainsi, la topologie est mise à jour avec un nouveau point d'accès N2_PAC déployé dans le réseau d'accès cible, en l'occurrence le deuxième réseau d'accès N2.

S'il existe une correspondance et que la mobilité a été réalisée avec succès, soit aucune information n'est enregistrée soit une ou plusieurs informations concernant les informations d'identifiants de points d'accès source et cible et de type d'accès source et cible, indication de succès de la mobilité notamment sous la forme d'une information de mise à jour, la mobilité (délai par exemple), et/ou la qualité d'accès (premier et/ou deuxième réseaux d'accès, par exemple débit) sont enregistrés.

S'il existe une correspondance et que la mobilité a échoué, les informations d'identifiants de points d'accès source et cible et de type d'accès source et cible, indication d'échec de la mobilité, éventuellement la cause d'échec notamment sous la forme d'une information de mise à jour.

Le procédé de gestion d'information de topologie est apte à réitérer la mise à jour MaJ notamment à chaque fois que le terminal 1 de communication multi-accès exécute une mobilité entre réseaux d'accès hétérogènes. De cette manière, le terminal 1 de communication multi-accès construit au fur et à mesure de ces déplacements dans le réseau de communication une liste de la topologie des réseaux d'accès que le terminal 1 de communication multi-accès a pu détecté.

La figure 7 illustre en outre un procédé de gestion de base de données d'informations sur la topologie de réseaux d'accès hétérogènes *G_Bdd_topo.* Le procédé de gestion *G_Bdd_topo* comporte une mise à jour *MaJ_topo* d'au moins une information sur la topologie d'au moins un desdits réseaux d'accès d'au moins une zone géographique spécifiée en fonction d'au moins une information de mise à jour stockée dans un terminal 1 de communication multi-accès de communication apte à modifier des informations sur la topologie reçues dudit dispositif de renseignement 2 et stockées dans ledit terminal 1 de communication multi-accès en fonction d'une mobilité de réseaux d'accès mise en oeuvre par ledit terminal 1 de communication multi-accès.

Le procédé de gestion de base de données 21 *G_Bdd_topo* comporte une réception ou récupération *rec*(*i_ud*) de l'information de mise à jour *i_ud* du procédé de mobilité *Mob* ou du procédé de gestion *G_topo* (non illustré) du terminal 1 de communication multi-accès. Notamment, un procédé de mobilité *Mob* comporte, suite à une requête en mobilité *req_Mob_*N2→ NI d'un réseau d'accès source, par exemple le deuxième réseau d'accès N2, vers un réseau d'accès cible, par exemple le réseau d'accès NI, une émission d'une requête d'information de topologie concernant le(s) réseau(x) d'accès concerné par la mobilité *req_topo_*N2*_tr*(*i_ud*) dans laquelle a été intégré l'information de mise à jour *i_ud.* Ainsi, le procédé de mobilité *Mob* comporte une transmission de l'information de mise à jour tr(*i_ud*) du terminal 1 de communication multi-accès vers le dispositif de renseignement 2.

Le procédé de gestion de base de données 21 *G_Bdd_topo* comporte une vérification du résultat de la mobilité *i_ud*(r) ?afin d'opérer une mise à jour *MaJ_topo* en fonction du résultat. Notamment, lorsque le résultat est un succès OK, le nouveau point d'accès source N1_PAS est enregistré *n*(*i_topo*) dans l'information de topologie correspondant à la zone géographique concernée par la mobilité ou, si aucune information de topologie est enregistrée pour cette zone géographique, une nouvelle information de topologie est crée dans laquelle est enregistré ce point d'accès N1_PAS. Et/ou par exemple, lorsque le résultat est un échec N, une donnée concernant le point d'accès cible N2_PAC concerné est enregistrée dans l'information de topologie comportant ce point d'accès N2_PAC ou le point d'accès N2_PAC est supprimé des informations topologique.

Dans une variante de réalisation de l'invention, le dispositif de renseignement 2 vérifie le résultat de la mobilité fournie par une information de mise à jour. Dans le cas où le terminal 1 de communication multi-accès n'enregistre aucune information si un point d'accès cible N2_PAC existe dans les informations sur la topologie enregistré dans le terminal 1 de communication multi-accès et que la mobilité a été opéré avec succès, si le dispositif de renseignement 2 détecte que la mobilité a été exécutée avec succès (par exemple, r a une valeur OK), le dispositif de renseignement 2 enregistre les informations d'identifiants de points d'accès source et cible et de type d'accès source et cible, indication de succès de la mobilité notamment de l'information de mise à jour comme une nouvelle entrée dans une table correspondante de topologie des réseaux d'accès de la base de données 21.

Si la mobilité a échoué, le dispositif de renseignement 2 récupère l'identifiant de point d'accès cible ID_N2_PAC et enregistre une indication d'échec de mobilité vers ce points d'accès sur les entrées de la base de données 21 correspondant à ce point d'accès cible N2_PAC. Ainsi, le dispositif de consultation 22 détectera les points d'accès qui ont subit des dysfonctionnements (surcharge, problèmes techniques, etc.) et en tiendra compte lors de ses réponses aux autres terminaux multi-accès.

Dans une variante de réalisation de l'invention, seul les mobilités vers des points d'accès permettant à un terminal 1 de communication multi-accès de se connecter au réseau de communication (à la couche de commande du réseau de communication aussi appelée couche coeur ou par abus de langage réseau de commande et réseau coeur) seront considérer comme mobilité ayant été exécutée avec succès et donc, seuls ses points d'accès seront enregistrés comme nouvelle entrée dans la base de données 21. Ainsi, les points d'accès qui ne donnent pas accès au réseau coeur ne seront pas inclus dans l'information de mise à jour. Par conséquent, les points d'accès aux technologies radio capillaires se trouvant dans la localisation du terminal 1 de communication multi-accès ne sont de ce fait pas considérés.

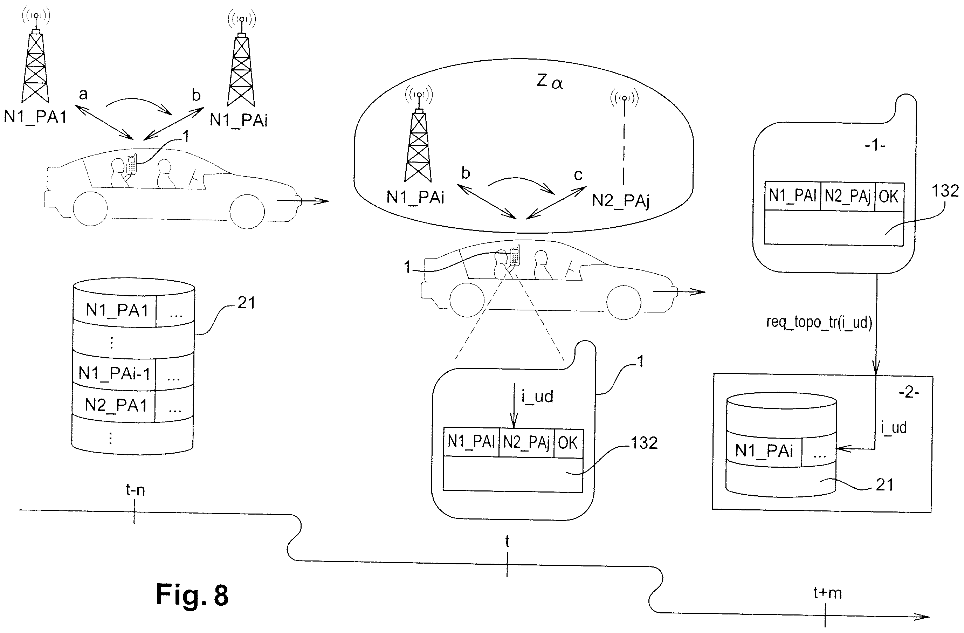

La figure 8 illustre une utilisation de l'invention. Un utilisateur possède un terminal 1 de communication multi-accès permettant notamment d'accéder à au moins un réseau de communication au travers d'au moins un premier réseau d'accès N1 et un deuxième réseau d'accès N2.

A un instant T-n dans le temps, le terminal 1 de communication multi-accès est connecté au réseau de communication via le premier réseau d'accès N1 en étant rattaché au point d'accès N1_PA1. L'utilisateur du terminal 1 de communication multi-accès se déplaçant le terminal 1 de communication multi-accès 1 se trouve en sortie de la zone de couverture du point d'accès N1_PA1 qui passe le relais au point d'accès suivant du même premier réseau d'accès N1_PAi. Le terminal 1 de communication multi-accès est bascule son rattachement a) du point d'accès N1_PA1 vers b) le point d'accès suivant N1_PAi pour conserver sa connexion au réseau de communication via le premier réseau d'accès N1. Ce point d'accès N1_PAi (en gras sur la figure) a été mis en place après la création de la base de données 21 d'informations sur la topologie de réseaux d'accès hétérogènes, et n'est donc pas enregistré dans cette base de données 21.

A un instant t dans le temps, le terminal 1 de communication multi-accès demande une mobilité de réseaux d'accès, notamment pour suivre les règles d'accès au réseau de communication établi par l'opérateur de télécommunication auquel le terminal 1 de communication multi-accès a souscrit. Le terminal 1 de communication multi-accès comporte dans sa mémoire 132 d'information de topologie concernant la zone géographique Zα dans laquelle il se trouve. L'information de topologie concernant la zone géographique Zα indique un point d'accès du deuxième réseau N2_PAj dans cette zone. Le terminal 1 de communication multi-accès tente donc une mobilité d'accès du premier réseau d'accès N1 au deuxième réseau d'accès N2 en basculant son rattachement b) du point d'accès N1_PAi du premier réseau d'accès au point d'accès N2_Paj du deuxième réseau d'accès N2. Suite à cette mobilité d'accès, une information de mise à jour est mémorisée dans le terminal 1 de communication multi-accès pour enregistrer le nouveau point d'accès N1_PAi du premier réseau d'accès N1.

A un instant t+m, le terminal 1 de communication multi-accès ayant besoin d'information de topologie concernant une zone géographique pour laquelle sa mémoire 132 soit ne comporte aucune information de topologie, soit comporte une information de topologie périmée (c'est-à-dire fournie par le dispositif de renseignement 2 depuis une période de temps supérieur à un délai de péremption fixé), requière *req_topo_tr*(*i_ud*) cette information de topologie auprès du dispositif de renseignement 2 en incluant les informations de mise à jour mémorisées soit depuis la dernière requête d'information de topologie soit dans une période de temps de mise à jour, par exemple égale au délai de péremption fixé. L'information de mise à jour *i_ud* est utilisée pour mettre à jour les informations sur la topologie de la base de données 21.

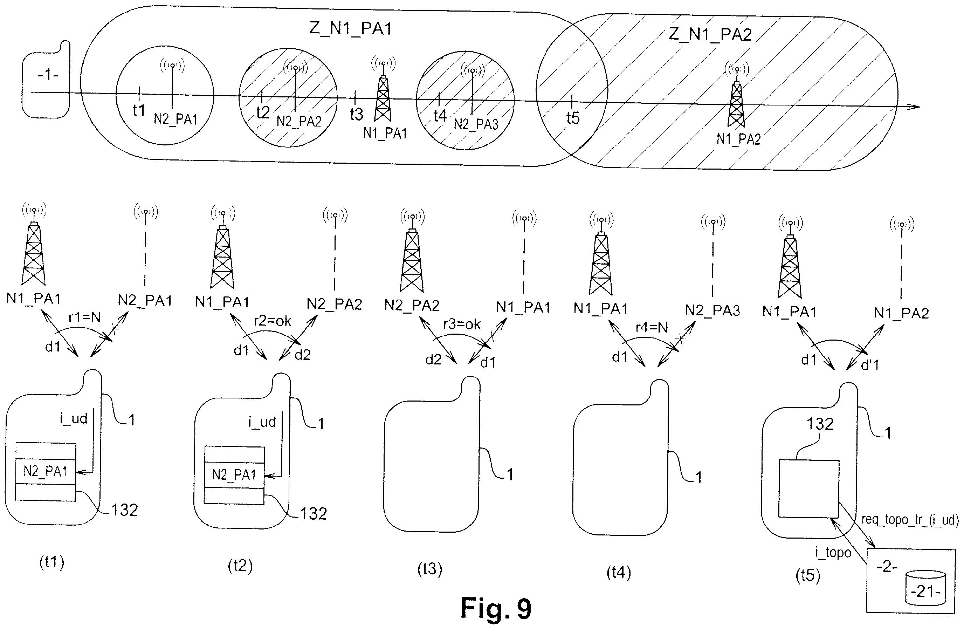

La figure 9 illustre un autre cas d'utilisation de l'invention. Considérons le cas d'un opérateur de télécommunication *Mo*bile ayant un premier réseau d'accès N1, par exemple un réseau d'accès national de type GSM couvrant l'ensemble du territoire. Cet opérateur de télécommunication Mobile a déployé également sur l'ensemble du territoire des points d'accès de type WLAN pour fournir un deuxième réseau d'accès N2 ou réseau d'accès alternatif à ces services *Mo*biles dans des zones géographiques données (par exemple: aéroports, grandes surfaces...etc.).

L'opérateur de télécommunication Mobile a mis en oeuvre en complément de son premier réseau d'accès de type GSM au réseau de communication GSM, une solution d'accès à travers le deuxième réseau d'accès N2, WLAN, à son réseau de communication GSM. Un exemple est la technologie I-WLAN définie dans la spécification 3GPP TS24.234. Une solution de mobilité entre le premier réseau d'accès N1, national GSM, et le deuxième réseau d'accès N2, WLAN, est en outre mise en place afin d'assurer un service sans coupure aux abonnées lorsque le terminal 1 de communication Mobile multi-accès passe d'un accès de type GSM de l'opérateur à un accès de type WLAN. Un exemple de solutions qui permettent ce type de mobilité est le protocole *Mobile IP* spécifié dans l'organisme IETF dans les RFC 3344, RFC 3220 et RFC 2002 pour IPv4 et dans la RFC 3775 pour IPv6.

La figure 9 représente une cellule GSM correspondant à un point d'accès N1_PA1 du premier réseau d'accès N1, GSM, de l'opérateur de télécommunication Mobile dont la couverture est superposée avec les couvertures de trois points d'accès WLAN N2_PA1, N2_PA2, N2_PA3 déployés par le même opérateur de télécommunication *Mob*ile.

A l'instant t1, le terminal 1 de communication multi-accès n'a aucune connaissance de la présence des points d'accès N2_PA2 et N2_PA3. Par contre le terminal 1 de communication multi-accès a été informé, par la plateforme de renseignement 2, notamment une plateforme ANDSF, lors de la dernière requête/réponse entre le terminal 1 de communication multi-accès et la plateforme de renseignement 2, que le point d'accès WLAN N2_PA2 est présent dans la zone géographique Z_N1_PA1 correspondant à la cellule GSM du point d'accès N1_PA1 dans laquelle le terminal 1 de communication multi-accès se trouve. Cette indication a été envoyée dans l'information de topologie (Discovery Information) envoyée par la plateforme de renseignement 2 au terminal 1 de communication multi-accès.

L'information de topologie que le terminal 1 de communication multi-accès a reçue de la plateforme de renseignement 2 et stockée dans sa mémoire 132 préalablement à l'instant t1 est la suivante:

| **Type d'accès** | **Identifiant de l'accès** | **Zone de validité** |
|---|---|---|
| WLAN | ID_N2_PA1 | ID_N1_PA1 |

A l'instant t1, suite à ses déplacements, le terminal 1 de communication multi-accès connecté d1 au réseau de communication à travers le point d'accès N1_PA1 est entré dans la zone de couverture du point d'accès WLAN N2_PA1. Le terminal 1 de communication multi-accès tente d'accéder au réseau de communication à travers ce point d'accès N2_PA1 Le point d'accès N2_PA1 ne fonctionnant pas correctement (notamment en raison d'un problème radio du point d'accès), le terminal 1 de communication multi-accès ne peut pas se connecter au réseau de communication de l'opérateur de télécommunication Mobile à travers le point d'accès N2_PA1 : la mobilité de réseaux d'accès demandée à l'instant t1 échoue r1=N. Le terminal 1 de communication multi-accès stocke dans sa mémoire 132 l'information de mise à jour *i_ud* suivantes en suivant un procédé de gestion d'information de topologie:

| **Type Accès source** | **Identifiant Point d'accès source** | **Type Accès cible** | **Identifiant Point d'accès cible** | **Résultat** | **Caractérisation du Résultat** |
|---|---|---|---|---|---|
| GSM | ID_N1_PA1 | WLAN | ID_N2_PA1 | N | Problème de connectivité |

Le terminal 1 de communication multi-accès continue ses déplacements. A l'instant t2, le terminal 1 de communication multi-accès toujours connecté au réseau de communication via le point d'accès N1_PA1 détecte la présence du point d'accès N2_PA2. Le terminal 1 de communication multi-accès établit une connexion WLAN avec ce point d'accès et acquiert une adresse IP ainsi que la connectivité IP vers le réseau WAN (en anglais, Wide Area Network). Le terminal 1 de communication multi-accès effectue une mobilité de réseaux d'accès en établissant une connexion d2 avec le réseau de communication via le point d'accès N2_PA2. La procédure de mobilité de la cellule GSM N1_PA1 du réseau d'accès source, en l'occurrence le premier réseau d'accès N1, GSM, au point d'accès N2_PA2 du réseau d'accès cible, en l'occurrence le deuxième réseau d'accès N2, WLAN, se passe avec succès : r2=OK. Le terminal 1 de communication multi-accès n'ayant dans sa mémoire 132 aucune information de topologie concernant le point d'accès N2_PA2 et la mobilité ayant été exécutée avec succès, le terminal 1 de communication multi-accès stocke dans sa mémoire 132 l'information de mise à jour *i_ud* suivantes en suivant un procédé de gestion d'information de topologie:

| **Type Accès source** | **Identifiant Point d'accès source** | **Type Accès cible** | **Identifiant Point d'accès cible** | **Résultat** | **Caractérisation du Résultat** |
|---|---|---|---|---|---|
| GSM | ID_N1_PA1 | WLAN | ID_N2_PA2 | OK | N/A |

A l'instant t3, le terminal 1 de communication multi-accès commence à perdre la couverture WLAN du point d'accès N2_PA2 et par conséquent exécute la mobilité inverse du point d'accès N2_PA2 du deuxième réseau d'accès N2, WLAN, à la cellule GSM N1_PA1 du premier réseau d'accès N1, GSM. La procédure de mobilité se passe avec succès : r3=OK Le terminal 1 de communication multi-accès ayant dans sa mémoire 132 une information de topologie concernant le point d'accès N1_PA1 et la mobilité ayant été exécutée avec succès, le terminal 1 de communication multi-accès n'enregistre aucune information concernant cette mobilité.

Le terminal 1 de communication multi-accès détecte à nouveau la présence d'un point d'accès du deuxième réseau d'accès N2, WLAN : le point d'accès N2_PA3. Le terminal 1 de communication multi-accès tente une mobilité de réseaux d'accès vers ce point d'accès en s'associant avec ce point d'accès mais sans succès : r4=N. La session au travers du réseau de communication continue donc sur la cellule GSM N1_PA1. Le terminal 1 de communication multi-accès n'ayant dans sa mémoire 132 aucune information de topologie concernant le point d'accès N2_PA3 et la mobilité ayant échoué, le terminal 1 de communication multi-accès n'enregistre aucune information concernant cette mobilité.

A l'instant t4, le terminal 1 de communication multi-accès commence à perdre la couverture GSM de la cellule N1_PA1 et entre dans la couverture GSM de la cellule N1_PA2. Le terminal 1 de communication multi-accès vérifie les informations récupérées précédemment de la plateforme de renseignement 2 et découvre qu'il n'a pas d'informations concernant la zone géographique Z_N1_PA2 couverte par la cellule GSM N1_PA2. Le terminal 1 de communication multi-accès décide donc de contacter la plateforme de renseignement 2 en générant une requête d'information de topologie ou *Access Network Info Request* en anglais (notamment suivant la procédure spécifiée dans la spécification 3GPP TS24.302).

Le terminal 1 de communication multi-accès ajoute à la requête d'information de topologie des données notamment sous la forme d'un nouvel attribut. Cet attribut est défini par une liste de la topologie des réseaux d'accès construite par le terminal 1 de communication multi-accès en se basant sur le procédé de gestion d'information de topologie, c'est-à-dire sur les informations de mise à jour stockée dans la mémoire 132. Le terminal 1 de communication multi-accès transmet la requête d'information de topologie à la plateforme ANSDF 2.

La plateforme de renseignement 2 traite la requête d'information de topologie pour fournir les informations sur la topologie concernant cette zone géographique Z_N1_PA2 stockées dans la base de données 21 au terminal 1 de communication multi-accès, notamment selon les spécifications 3GPP TS24.302 et TS24.312. En outre, la plateforme de renseignement 2 traite l'information de mis à jour *i_ud* pour injecter des informations dans la base de données 21 : dans notre exemple, l'information suivante est ajoutée comme une entrée dans la base de données 21 d'informations sur la topologie de réseaux d'accès hétérogènes.

| **Accès source** | **Point d'accès source** | **Accès cible** | **Point d'accès cible** |
|---|---|---|---|
| GSM | ID_N1_PA1 | WLAN | ID_N2_PA2 |

De plus, la plateforme de renseignement 2 recherche dans la base de données 21 d'informations sur la topologie de réseaux d'accès hétérogènes le point d'accès N2_PA1 et marque ce point d'accès comme rencontrant des problèmes de connectivité.

Les procédés selon l'invention, notamment le procédé de gestion d'informations sur la topologie et/ou le procédé de gestion de base de données sont mis en oeuvre par des programmes d'ordinateur exécutant les étapes des procédés grâce à un processeur.

L'invention vise aussi au moins un support comportant un programme d'ordinateur mettant en oeuvre le procédé de gestion d'information de topologie ou le procédé de gestion de base de données 21.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

L'invention apporte l'avantage de permettre à un terminal 1 de communication multi-accès de tenir compte lors d'une mobilité de réseaux d'accès de tenir compte de son expérience passé de mobilité de réseaux d'accès.

Un autre avantage est d'en faire bénéficier les autres terminaux ayant souscrits aux mêmes réseaux d'accès plus ou moins rapidement suivant la mise à jour de la base de données 21 mise en oeuvre (immédiate lors d'une transmission immédiate de l'information de mise à jour, ou plus ou moins rapide suivant une période de temps prédéterminée de mise à jour lors d'une transmission périodique de l'information de mise à jour ou le délai pour une mobilité de réseaux d'accès nécessitant une consultation du dispositif de renseignement 2 par le terminal 1 de communication multi-accès lors d'une transmission dans une requête d'information de topologie, etc.).

Un autre avantage est que l'erreur humaine est ainsi évitée si la configuration est uniquement faite sur la base des informations de mise jour voire réduite lorsque la configuration manuelle et la configuration sur la base des informations de mise à jour coexiste.

Un autre avantage est que l'invention permet tenir aussi du déploiement d'une nouvelle antenne relais dans un réseau d'accès et/ou d'une mise à jour de la planification cellulaire et/ou d'un changement dans la couche radio lors de la mise à jour au niveau du terminal 1 de communication multi-accès détectant cette modification du réseau d'accès, voire au niveau de la base de données 21 d'informations sur la topologie de réseaux d'accès hétérogènes.

## Revendications

1. Dispositif de gestion d'informations sur la topologie de plusieurs réseaux d'accès hétérogènes, le dispositif de gestion étant implémenté dans un terminal (1) de communication multi-accès, **caractérisé en ce que** ledit dispositif de gestion d'informations sur la topologie (13,13') comporte des moyens de mise à jour (134,134') des informations sur la topologie (*i_topo*) reçues d'un dispositif de renseignement (2) et stockées dans le terminal (1) de communication multi-accès, la mise à jour étant effectuée, par le terminal (1) de communication multi-accès, en fonction d'une mobilité de réseaux d'accès, les informations sur la topologie reçue ayant un attribut de zone géographique correspondant à la zone géographique dans laquelle se trouve le terminal lors de la réception, les informations sur la topologie mises à jour étant transmises au dispositif de renseignement (2).

2. Dispositif de gestion d'informations sur la topologie selon la revendication précédente **caractérisé en ce que** les moyens de mise à jour (134,134') enregistrent une information de mise à jour (*i_ud*) en fonction d'une mobilité du terminal (1) de communication multi-accès entre un premier réseau d'accès (N1) et un deuxième réseau d'accès (N2), ladite information de mise à jour (*i_ud*) comportant :
• un identifiant d'un point d'accès source (ID_N1_PAS, ID_N1_PAi, ID_N1_PA1, ID_N2_PA2) d'un desdits premier réseau d'accès (N1) et deuxième réseau d'accès (N2), le terminal (1) de communication multi-accès étant connecté audit point d'accès source (N1_PAS, N1_PAi, N1_PA1, N2_PA2) avant la mobilité (*Mob*),
• un identifiant d'un point d'accès cible (ID_N2_PAC, ID_N2_PAj, ID_N2_PA1, ID_N2_PA2, ID_N2_PA3, ID_N1_PA1) de l'autre desdits premier réseau d'accès (N1) et du deuxième réseau d'accès (N2), le terminal (1) de communication multi-accès tentant de se connecter audit point d'accès cible (N2_PAC, N2_PAj, N2_PA1, N2_PA2, N2_PA3, N1_PA1) durant la mobilité (*Mob*), les types des réseaux d'accès des premier et deuxième réseaux d'accès (T_N1, T_N2).

3. Dispositif de gestion d'informations sur la topologie selon la revendication précédente **caractérisé en ce que** l'information de mise à jour (*i_ud*) comporte en outre le résultat (r) de la mobilité de réseaux d'accès.

4. Dispositif de gestion d'informations sur la topologie selon la revendication précédente **caractérisé en ce que** l'information de mise à jour (*i_ud*) comporte en outre une information de caractérisation du résultat (*r_car*) de mobilité de réseaux d'accès.

5. Dispositif de gestion d'informations sur la topologie selon l'une quelconques des revendications précédentes **caractérisé en ce que** ledit dispositif de gestion d'informations sur la topologie (13, 13') comporte des moyens de transmission (131') d'une information de mise à jour (*i_ud*) au dispositif de renseignement (2).

6. Procédé de gestion de la topologie de plusieurs réseaux d'accès hétérogènes apte être mis en oeuvre par un terminal (1) de communication multi-accès, **caractérisé en ce que** le procédé de gestion (*G_topo*) comporte une mise à jour (*MaJ*) d'une information sur la topologie reçue par ledit terminal (1) de communication multi-accès d'un dispositif de renseignement (2) sur la topologie desdits réseaux d'accès, la mise à jour étant effectuée, par le terminal (1) de communication multi-accès, en fonction d'une mobilité (*Mob*) de réseaux d'accès, les informations sur la topologie reçue ayant un attribut de zone géographique correspondant à la zone géographique dans laquelle se trouve le terminal lors de la réception, les informations sur la topologie mises à jour étant transmises au dispositif de renseignement (2).

7. Programme comprenant des instructions de code de programme pour l'exécution des étapes du procédé de gestion de la topologie de plusieurs réseaux d'accès selon la revendication précédente lorsque ledit programme est exécuté par un processeur.

8. Terminal de communication multi-accès, **caractérisé en ce que** ledit terminal (1) de communication multi-accès comporte
• plusieurs interfaces d'accès (11,12) à des réseaux d'accès hétérogènes,
• un dispositif de mobilité (133) de réseaux d'accès dudit terminal (1) de communication multi-accès entre un premier réseau d'accès (N1) parmi lesdits réseaux d'accès hétérogènes et un deuxième réseau d'accès (N2) parmi lesdits réseaux d'accès hétérogènes,
• un dispositif d'échange (131, 131') avec un dispositif de renseignement (2) sur la topologie desdits réseaux d'accès,
• un dispositif de mise à jour (134, 134') des informations sur la topologie (*i_topo*) reçues dudit dispositif d'échange (131, 131') et stockées dans le terminal (1) de communication multi-accès, la mise à jour étant effectuée en fonction d'une mobilité mise en oeuvre par le dispositif de mobilité (133), les informations sur la topologie reçue ayant un attribut de zone géographique correspondant à la zone géographique dans laquelle se trouve le terminal lors de la réception, les informations sur la topologie mises à jour étant transmises au dispositif de renseignement (2).

9. Terminal de communication multi-accès selon la revendication précédente, **caractérisé en ce que** le dispositif d'échange (131, 131') intègre une information de mise à jour fournie par le dispositif de mise à jour (134, 134') dans une requête d'information sur la topologie (*req_topo*) du terminal (1) de communication multi-accès audit dispositif de renseignement (2).

10. Dispositif de gestion d'une base de données d'informations sur la topologie de réseaux d'accès hétérogènes, **caractérisé en ce que** ledit dispositif de gestion de base de données (23) comporte des moyens de mise à jour dans la base de données (231) d'au moins une information sur la topologie (*i_topo*) d'au moins un desdits réseaux d'accès d'au moins une zone géographique spécifiée en fonction d'au moins une information de mise à jour (*i_ud*) reçue d'un terminal (1) de communication multi-accès, ladite information de mise à jour (*i_ud*) étant apte à modifier des informations sur la topologie reçues d'un dispositif de renseignement (2) comportant ladite base de données (21), et stockées dans ledit terminal (1) de communication multi-accès en fonction, la mise à jour étant effectuée, par le terminal (1) de communication multi-accès, d'une mobilité de réseaux d'accès, les informations sur la topologie reçue ayant un attribut de zone géographique correspondant à la zone géographique dans laquelle se trouve le terminal lors de la réception, les informations sur la topologie mises à jour étant transmises au dispositif de renseignement (2).

11. Procédé de gestion d'une base de données d'informations sur la topologie de réseaux d'accès hétérogènes , **caractérisé en ce que** ledit procédé de gestion de base de données (*G_Bdd_topo*) comporte une mise à jour dans ladite base de données (*MaJ_topo*) d'au moins une information sur la topologie (*i_topo*) d'au moins un desdits réseaux d'accès d'au moins une zone géographique spécifiée en fonction d'au moins une information de mise à jour (*i_ud*) stockée dans un terminal (1) de communication multi-accès de communication apte à modifier des informations sur la topologie (*i_topo*) reçues d'un dispositif de renseignement (2) comportant ladite base de données (21) et stockées dans ledit terminal (1) de communication multi-accès, la mise à jour étant effectuée, par le terminal (1) de communication multi-accès, en fonction d'une mobilité (*Mob*) de réseaux d'accès, les informations sur la topologie reçue ayant un attribut de zone géographique correspondant à la zone géographique dans laquelle se trouve le terminal lors de la réception, les informations sur la topologie mises à jour étant transmises au dispositif de renseignement (2).

12. Programme comprenant des instructions de code de programme pour l'exécution des étapes du procédé de gestion d'une base de données (21) d'informations sur la topologie de réseaux d'accès selon la revendication précédente lorsque ledit programme est exécuté par un processeur.

13. Dispositif de renseignement sur la topologie de réseaux d'accès hétérogènes comportant :
• Un dispositif de consultation (22) apte à transmettre à un terminal (1) de communication multi-accès au moins une information sur la topologie (i_topo) d'au moins un réseau d'accès dans une zone géographique spécifiée,
• une base de données (21) d'informations sur la topologie de réseaux d'accès hétérogènes,
• un dispositif de gestion (23) de ladite base de données (21) apte à permettre une mise à jour dans la base de données (*MaJ_topo*) d'au moins une information sur la topologie (*i_topo*) d'au moins un desdits réseaux d'accès d'au moins une zone géographique spécifiée en fonction d'au moins une information de mise à jour (*i_ud*) stockée dans un terminal (1) de communication multi-accès de communication apte à modifier des informations sur la topologie (*i_topo*) reçues dudit dispositif de renseignement (2) et stockées dans ledit terminal (1) de communication multi-accès, la mise à jour étant effectuée, par le terminal (1) de communication multi-accès, en fonction d'une mobilité (*Mob*) de réseaux d'accès, les informations sur la topologie reçue ayant un attribut de zone géographique correspondant à la zone géographique dans laquelle se trouve le terminal lors de la réception, les informations sur la topologie mises à jour étant transmises au dispositif de renseignement (2).

## Patentansprüche

1. Vorrichtung zur Verwaltung von Informationen über die Topologie mehrerer heterogener Zugangsnetze, wobei die Verwaltungsvorrichtung in ein Mehrfachzugriff-Kommunikationsendgerät (1) eingebaut ist, **dadurch gekennzeichnet, dass** die Verwaltungsvorrichtung von Informationen über die Topologie (13, 13') Aktualisierungseinrichtungen (134, 134') der Informationen über die Topologie (i_topo) aufweist, die von einer Auskunftsvorrichtung (2) empfangen und im Mehrfachzugriff-Kommunikationsendgerät (1) gespeichert werden, wobei die Aktualisierung vom Mehrfachzugriff-Kommunikationsendgerät (1) abhängig von einer Mobilität von Zugangsnetzen ausgeführt wird, wobei die Informationen über die empfangene Topologie ein geographisches Zonenattribut haben, das der geographischen Zone entspricht, in der sich das Endgerät beim Empfang befindet, wobei die aktualisierten Informationen über die Topologie an die Auskunftsvorrichtung (2) übertragen werden.

2. Verwaltungsvorrichtung von Informationen über die Topologie nach dem vorhergehenden Anspruch, **dadurch gekennzeichnet, dass** die Aktualisierungseinrichtungen (134, 134') eine Aktualisierungsinformation (i_ud) abhängig von einer Mobilität des Mehrfachzugriff-Kommunikationsendgeräts (1) zwischen einem ersten Zugangsnetz (N1) und einem zweiten Zugangsnetz (N2) abspeichern, wobei die Aktualisierungsinformation (i_ud) aufweist:
• eine Kennung eines Ausgangs-Zugangspunkts (ID_N1_PAS, ID_N1_PAi, ID_N1_PA1, ID_N2_PA2) eines vom ersten Zugangsnetz (N1) und vom zweiten Zugangsnetz (N2), wobei das Mehrfachzugriff-Kommunikationsendgerät (1) mit dem Ausgangs-Zugangspunkt (N1_PAS, N1_PAi, N1_PA1, N2_PA2) vor der Mobilität (Mob) verbunden wird,
• eine Kennung eines Ziel-Zugangspunkts (ID_N2_PAC, ID_N2_PAj, ID_N2_PA1, ID_N2_PA2, ID_N2_PA3, ID_N1_PA1) des anderen vom ersten Zugangsnetz (N1) und vom zweiten Zugangsnetz (N2), wobei das Mehrfachzugriff-Kommunikationsendgerät (1) versucht, sich mit dem Ziel-Zugangspunkt (N2_PAC, N2_PAj, N2_PA1, N2_PA2, N2_PA3, N1_PA1) während der Mobilität (Mob) zu verbinden, die Arten der Zugangsnetze der ersten und zweiten Zugangsnetze (T_N1, T_N2).

3. Verwaltungsvorrichtung von Informationen über die Topologie nach dem vorhergehenden Anspruch, **dadurch gekennzeichnet, dass** die Aktualisierungsinformation (i_ud) außerdem das Ergebnis (r) der Mobilität von Zugangsnetzen aufweist.

4. Verwaltungsvorrichtung von Informationen über die Topologie nach dem vorhergehenden Anspruch, **dadurch gekennzeichnet, dass** die Aktualisierungsinformation (i_ud) außerdem eine Kennzeichnungsinformation des Ergebnisses (r_car) der Mobilität von Zugangsnetzen aufweist.

5. Verwaltungsvorrichtung von Informationen über die Topologie nach einem der vorhergehenden Ansprüche, **dadurch gekennzeichnet, dass** die Verwaltungsvorrichtung von Informationen über die Topologie (13, 13') Übertragungseinrichtungen (131') einer Aktualisierungsinformation (i_ud) an die Auskunftsvorrichtung (2) aufweist.

6. Verwaltungsverfahren der Topologie mehrerer heterogener Zugangsnetze, das von einem Mehrfachzugriff-Kommunikationsendgerät (1) verwendet werden kann, **dadurch gekennzeichnet, dass** das Verwaltungsverfahren (G_topo) eine Aktualisierung (MaJ) einer Information über die Topologie aufweist, die vom Mehrfachzugriff-Kommunikationsendgerät (1) von einer Auskunftsvorrichtung (2) über die Topologie der Zugangsnetze empfangen wird, wobei die Aktualisierung vom Mehrfachzugriff-Kommunikationsendgerät (1) abhängig von einer Mobilität (Mob) von Zugangsnetzen ausgeführt wird, wobei die Informationen über die empfangene Topologie ein geographischen Zonenattribut haben, das der geographischen Zone entspricht, in der sich das Endgerät beim Empfang befindet, wobei die aktualisierten Informationen über die Topologie an die Auskunftsvorrichtung (2) übertragen werden.

7. Programm, das Programmcodeanweisungen zur Ausführung der Schritte des Verwaltungsverfahrens der Topologie mehrerer Zugangsnetze nach dem vorhergehenden Anspruch enthält, wenn das Programm von einem Prozessor ausgeführt wird.

8. Mehrfachzugriff-Kommunikationsendgerät, **dadurch gekennzeichnet, dass** das Mehrfachzugriff-Kommunikationsendgerät (1) aufweist
• mehrere Zugangsschnittstellen (11, 12) zu heterogenen Zugangsnetzen,
• eine Mobilitätsvorrichtung (133) von Zugangsnetzen des Mehrfachzugriff-Kommunikationsendgeräts (1) zwischen einem ersten Zugangsnetz (N1) unter den heterogenen Zugangsnetzen und einem zweiten Zugangsnetz (N2) unter den heterogenen Zugangsnetzen,
• eine Austauschvorrichtung (131, 131') mit einer Auskunftsvorrichtung (2) über die Topologie der Zugangsnetze,
• eine Aktualisierungsvorrichtung (134, 134') der Informationen über die Topologie (i_topo), die von der Austauschvorrichtung (131, 131') empfangen und im Mehrfachzugriff-Kommunikationsendgerät (1) gespeichert werden, wobei die Aktualisierung abhängig von einer Mobilität ausgeführt wird, die von der Mobilitätsvorrichtung (133) verwendet wird, wobei die Informationen über die empfangene Topologie ein geographisches Zonenattribut haben, das der geographischen Zone entspricht, in der sich das Endgerät beim Empfang befindet, wobei die aktualisierten Informationen über die Topologie an die Auskunftsvorrichtung (2) übertragen werden.

9. Mehrfachzugriff-Kommunikationsendgerät nach dem vorhergehenden Anspruch, **dadurch gekennzeichnet, dass** die Austauschvorrichtung (131, 131') eine Aktualisierungsinformation umfasst, die von der Aktualisierungsvorrichtung (134, 134') in einer Informationsanforderung über die Topologie (req_topo) des Mehrfachzugriff-Kommunikationsendgeräts (1) an die Auskunftsvorrichtung (2) geliefert wird.

10. Verwaltungsvorrichtung einer Datenbank von Informationen über die Topologie heterogener Zugangsnetze, **dadurch gekennzeichnet, dass** die Datenbank-Verwaltungsvorrichtung (23) Aktualisierungseinrichtungen in der Datenbank (231) mindestens einer Information über die Topologie (i_topo) mindestens eines der Zugangsnetze mindestens einer spezifizierten geographischen Zone abhängig von mindestens einer von einem Mehrfachzugriff-Kommunikationsendgerät (1) empfangenen Aktualisierungsinformation (i_ud) aufweist, wobei die Aktualisierungsinformation (i_ud) von einer die Datenbank (21) aufweisenden Auskunftsvorrichtung (2) empfangene und im Mehrfachzugriff-Kommunikationsendgerät (1) gespeicherte Informationen über die Topologie ändern kann, wobei die Aktualisierung vom Mehrfachzugriff-Kommunikationsendgerät (1) abhängig von einer Mobilität von Zugangsnetzen ausgeführt wird, wobei die empfangenen Informationen über die Topologie ein geographisches Zonenattribut haben, das der geographischen Zone entspricht, in der sich das Endgerät beim Empfang befindet, wobei die aktualisierten Informationen über die Topologie an die Auskunftsvorrichtung (2) übertragen werden.

11. Verwaltungsverfahren einer Datenbank von Informationen über die Topologie heterogener Zugangsnetze, **dadurch gekennzeichnet, dass** das Datenbank-Verwaltungsverfahren (G_Bdd_topo) eine Aktualisierung in der Datenbank (MaJ_topo) mindestens einer Information über die Topologie (i_topo) mindestens eines der Zugangsnetze mindestens einer spezifizierten geographischen Zone abhängig von mindestens einer in einem Mehrfachzugriff-Kommunikationsendgerät (1) gespeicherten Aktualisierungsinformation (i_ud) aufweist, die Informationen über die Topologie (i_topo) ändern kann, die von einer die Datenbank (21) aufweisenden Auskunftsvorrichtung (2) empfangen und im Mehrfachzugriff-Kommunikationsendgerät (1) gespeichert werden, wobei die Aktualisierung vom Mehrfachzugriff-Kommunikationsendgerät (1) abhängig von einer Mobilität (Mob) von Zugangsnetzen ausgeführt wird, wobei die Informationen über die empfangene Topologie ein geographisches Zonenattribut haben, das der geographischen Zone entspricht, in der sich das Endgerät beim Empfang befindet, wobei die aktualisierten Informationen über die Topologie an die Auskunftsvorrichtung (2) übertragen werden.

12. Programm, das Programmcodeanweisungen zur Ausführung der Schritte des Verwaltungsverfahrens einer Datenbank (21) von Informationen über die Topologie von Zugangsnetzen nach dem vorhergehenden Anspruch enthält, wenn das Programm von einem Prozessor ausgeführt wird.

13. Auskunftsvorrichtung über die Topologie heterogener Zugangsnetze, die aufweist:
• eine Abfragevorrichtung (22), die mindestens eine Information über die Topologie (i_topo) mindestens eines Zugangsnetzes in einer spezifizierten geographischen Zone an ein Mehrfachzugriff-Kommunikationsendgerät (1) übertragen kann,
• eine Datenbank (21) von Informationen über die Topologie heterogener Zugangsnetze,
• eine Verwaltungsvorrichtung (23) der Datenbank (21), die eine Aktualisierung in der Datenbank (MaJ_topo) mindestens einer Information über die Topologie (i_topo) mindestens eines der Zugangsnetze mindestens einer spezifizierten geographischen Zone abhängig von mindestens einer in einem Mehrfachzugriff-Kommunikationsendgerät (1) gespeicherten Aktualisierungsinformation (i_ud) erlauben kann, die Informationen über die Topologie (i_topo) ändern kann, die von der Auskunftsvorrichtung (2) empfangen und im Mehrfachzugriff-Kommunikationsendgerät (1) gespeichert werden, wobei die Aktualisierung vom Mehrfachzugriff-Kommunikationsendgerät (1) abhängig von einer Mobilität (Mob) von Zugangsnetzen ausgeführt wird, wobei die Informationen über die empfangene Topologie ein geographisches Zonenattribut haben, das der geographischen Zone entspricht, in der sich das Endgerät beim Empfang befindet, wobei die aktualisierten Informationen über die Topologie an die Auskunftsvorrichtung (2) übertragen werden.

## Claims

1. Device for managing information on the topology of several heterogeneous access networks, the management device being implemented in a multi-access communication terminal (1), **characterized in that** said device for managing information on the topology (13, 13') comprises means (134, 134') for updating information on the topology (*i_topo*) received from an information device (2) and stored in the multi-access communication terminal (1), the updating being performed, by the multi-access communication terminal (1), as a function of a mobility of access networks, the received information on the topology having a geographic zone attribute corresponding to the geographic zone in which the terminal is located upon the reception, the updated information on the topology being transmitted to the information device (2).

2. Device for managing information on the topology according to the preceding claim, **characterized in that** the updating means (134, 134') record an update information (*i_ud*) as a function of a mobility of the multi-access communication terminal (1) between a first access network (N1) and a second access network (N2), said update information (*i_ud*) comprising:
• an identifier of a source access point (ID_N1_PAS, ID_N1_PAi, ID_N1_PA1, ID_N2_PA2) of one of said first access network (N1) and second access network (N2), the multi-access communication terminal (1) being connected to said source access point (N1_PAS, N1_PAi, N1_PA1, N2_PA2) before the mobility (*Mob*)*,*
• an identifier of a target access point (ID_N2_PAC, ID_N2_PAj, ID_N2_PA1, ID_N2_PA2, ID_N2_PA3, ID_N1_PA1) of the other of said first access network (N1) and second access network (N2), the multi-access communication terminal (1) trying to connect to said target access point (N2_PAC, N2_PAj, N2_PA1, N2_PA2, N2_PA3, N1_PA1) during the mobility (*Mob*)*,* the access network types of the first and second access networks (T_N1, T_N2).

3. Device for managing information on the topology according to the preceding claim, **characterized in that** the update information (*i_ud*) further comprises the result (*r*) of the mobility of access networks.

4. Device for managing information on the topology according to the preceding claim, **characterized in that** the update information (*i_ud*) further comprises an information characterizing the result (*r_car*) of the mobility of access networks.

5. Device for managing information on the topology according to any one of the preceding claims, **characterized in that** said device for managing information on the topology (13, 13') comprises means (131') for transmitting an update information (*i_ud*) to the information device (2).

6. Method for managing the topology of several heterogeneous access networks capable of being implemented by a multi-access communication terminal (1), **characterized in that** the management method (*G_topo*) comprises an updating (MaJ) of an information on the topology received by said multi-access communication terminal (1) from an information device (2) on the topology of said access networks, the updating being performed, by the multi-access communication terminal (1), as a function of a mobility (*Mob*) of access networks, the received information on the topology having a geographic zone attribute corresponding to the geographic zone in which the terminal is located upon the reception, the updated information on the topology being transmitted to the information device (2).

7. Program comprising program code instructions for executing the steps of the method for managing the topology of several access networks according to the preceding claim when said program is run by a processor.

8. Multi-access communication terminal, **characterized in that** said multi-access communication terminal (1) comprises
• several access interfaces (11, 12) to heterogeneous access networks,
• an access network mobility device (133) of said multi-access communication terminal (1) between a first access network (N1) out of said heterogeneous access networks and a second access network (N2) out of said heterogeneous access networks,
• an exchange device (131, 131') with an information device (2) informing on the topology of said access networks,
• an updating device (134, 134') for updating the information on the topology (*i_topo*) received from said exchange device (131, 131') and stored in the multi-access communication terminal (1), the updating being performed as a function of a mobility implemented by the mobility device (133), the received information on the topology having a geographic zone attribute corresponding to the geographic zone in which the terminal is located upon the reception, the updated information on the topology being transmitted to the information device (2).

9. Multi-access communication terminal according to the preceding claim, **characterized in that** the exchange device (131, 131') incorporates an update information supplied by the updating device (134, 134') in a request for information on the topology (*req_topo*) from the multi-access communication terminal (1) to said information device (2) .

10. Device for managing a database of information on the topology of heterogeneous access networks, **characterized in that** said database management device (23) comprises means for updating, in the database (231), at least one information on the topology (*i_topo*) of at least one of said access networks of at least one specified geographic zone as a function of at least one update information (*i_ud*) received from a multi-access communication terminal (1), said update information (*i_ud*) being capable of modifying information on the topology received from an information device (2) comprising said database (21), and stored in said multi-access communication terminal (1) the updating being performed, by the multi-access communication terminal (1), as a function, of a mobility of access networks, the received information on the topology having a geographic zone attribute corresponding to the geographic zone in which the terminal is located upon the reception, the updated information on the topology being transmitted to the information device (2).

11. Method for managing a database of information on the topology of heterogeneous access networks, **characterized in that** said database management method (*G_Bdd_topo*) comprises an update, in said database (*MaJ_topo*)*,* of at least one information on the topology (*i_topo*) of at least one of said access networks of at least one specified geographic zone as a function of at least one update information (*i_ud*) stored in a multi-access communication terminal (1) capable of modifying information on the topology (*i_topo*) received from an information device (2) comprising said database (21) and stored in said multi-access communication terminal (1), the updating being performed, by the multi-access communication terminal (1), as a function of a mobility (*Mob*) of access networks, the received information on the topology having a geographic zone attribute corresponding to the geographic zone in which the terminal is located upon the reception, the updated information on the topology being transmitted to the information device (2).

12. Program comprising program code instructions for executing the steps of the method for managing a database (21) of information on the topology of access networks according to the preceding claim when said program is run by a processor.

13. Device for informing on the topology of heterogeneous access networks comprising:
• a consultation device (22) capable of transmitting, to a multi-access communication terminal (1), at least one information on the topology (i_topo) of at least one access network in a specified geographic zone,
• a database (21) of information on the topology of heterogeneous access networks,
• a device (23) for managing said database (21) capable of allowing an update in the database (*MaJ_topo*) of at least one information on the topology (*i_topo*) of at least one of said access networks of at least one specified geographic zone as a function of at least one update information (*i_ud*) stored in a multi-access communication terminal (1) capable of modifying information on the topology (*i_topo*) received from said information device (2) and stored in said multi-access communication terminal (1), the updating being performed, by the multi-access communication terminal (1), as a function of a mobility (*Mob*) of access networks, the received information on the topology having a geographic zone attribute corresponding to the geographic zone in which the terminal is located upon the reception, the updated information on the topology being transmitted to the information device (2).
